# EUROPEAN PATENT SPECIFICATION

(11) **EP 3 003 985 B1**
(45) Date of publication and mention of the grant of the patent: **08.08.2018**
(21) Application number: 14728190.1
(22) Date of filing: 04.06.2014
(51) Int. Cl.: C02F 1/28, B01D 61/04, C02F 1/44, C02F 101/34

(54) **PROCESS FOR REDUCING THE TOTAL ORGANIC CARBON IN WASTEWATER**
PROZESS ZUR VERRINGERUNG DES GESAMTORGANISCHEN KOHLENSTOFFS IN ABWASSER
PROCÉDÉ DE RÉDUCTION DE LA TENEUR TOTALE EN CARBONE ORGANIQUE DANS DES EAUX USÉES

(30) Priority: 04.06.2013 EP 13170484
(43) Date of publication of application: 13.04.2016
(73) Proprietor: BASF SE, 67056 Ludwigshafen am Rhein (DE); Dow Global Technologies LLC, Midland, MI 48674 (US)
(72) Inventor: BÄR, Holger, 21717 Fredenbeck (DE); GOLTZ, Harlan, R., Midland, Michigan 48642 (US); LINDNER, Joerg, 21709 Himmelpforten (DE); LENZ, Astrid, 53347 Alfter (DE)
(74) Representative: Herzog, Fiesser & Partner Patentanwälte PartG mbB
(86) International application number: PCT/EP2014/061595
(87) International publication number: WO 2014/195364

(56) References cited:
- EP-A1- 2 000 197
- WO-A1-01/00534
- WO-A1-2014/166821
- CN-B- 102 188 501
- JP-A- 2003 236 528
- US-A- 3 810 833

## Description

The present invention relates to a process for reducing the total organic carbon (TOC) in wastewater obtained from a process for the preparation of an olefin oxide.

Olefin oxides belong to the most important basic chemicals. The annual production of olefin oxides such as ethylene oxide or propylene oxide amounts in each case to almost one million tons per year. Olefin oxides are fore example widely used as starting compounds in the synthesis of ethylene glycol, polyethylene glycols, propylene glycol, polyether polyols, which in turn are used as starting materials the production of polymers such as polyesters or polyurethanes.

Several production routes for the preparation of an olefin oxide starting from an olefin have been developed to meet the high demand for olefin oxides. For example, a preferred route for the production of an olefin oxide which has already been implemented successfully at large scale is the epoxidation of the olefin with an aqueous hydrogen peroxide solution in the presence of an organic solvent and a heterogeneous catalyst.

The initially formed reaction mixture in the catalytic epoxidation of an olefin with hydrogen peroxide generally contains an organic solvent, water, the olefin oxide, optionally unreacted olefin, and oxygenate side- or by-products. Examples of oxygenate side- or by-products, in particular in case propene is reacted with an aqueous hydrogen peroxide solution obtaining propylene oxide, may include alkoxyalcohols, glycols, alpha-hydroperoxyalcohols, formaldehyde, acetaldehyde, hydroxyacetone, and the like.

In large scale production, the initially formed reaction mixture comprising the olefin oxide is usually subjected to a downstream work-up process comprising several separation and other work-up stages. The unreacted olefin and the organic solvent employed require an effective recovery in sufficient purity for their re-use. Further, considering in particular the large scale production of olefin oxides, many side- or by-products may occur in sufficiently large amounts so that they can be used, after a suitable effective separation, as chemical compounds for further use.

The water present in the initially formed reaction mixture originates either from the aqueous hydrogen peroxide solution or is one of the stoichiometric products of the epoxidation reaction. This amounts to several million tons of industrial wastewater per year obtained in the olefin oxide production. This wastewater requires thorough treatment for removing contaminants prior to its re-use or a release into the environment.

Among the publications covering the preparation of olefin oxides, only a few are concerned with the treatment of the wastewater and recovering side- or by-products from the reaction mixture.

WO-A 2004/000773 refers to a process of separating 1-methoxy-2-propanol and 2-methoxy-1-propanol from aqueous compositions, comprising dewatering of the aqueous composition comprising 1-methoxy-2-propanol and 2-methoxy-1-propanol to a concentration of 1-methoxy-2-propanol and 2-methoxy-1-propanol of at least 90 weight-% in total and isolation of 1-methoxy-2-propanol, 2-methoxy-1-propanol or mixtures thereof by means of distillation. According to WO-A 2004/000773, dewatering of the aqueous composition can be achieved by a membrane separation. Thereby the aqueous composition comprising 2-methoxy-1-propanol and 1-methoxy-2-propanol is contacted with a semipermeable, hydrophilic membrane in a suitable apparatus either in liquid phase as pervaporation step or in the gaseous phase as vapor permeation step. Across the semipermeable membrane a pressure difference is established. The permeate will substantially contain water and only a minor amount of 1-methoxy-2-propanol and 2-methoxy-1-propanol. According to WO-A 2004/000773, the major amount of 1-methoxy-2-propanol and 2-methoxy-1-propanol fed to the apparatus will not pass the membrane and can be collected as a retentate with a reduced water content.

US-A 5,599,955 describes an integrated process for the production of propylene oxide from a feedstream such as synthesis gas. In the process, propylene oxide is produced from a feedstream comprising hydrogen and a carbon oxide. The propylene stream is epoxidized with hydrogen peroxide which has been produced from hydrogen separated from a portion of the feedstream. The spent water stream produced by the epoxidation reaction is treated to remove heavy components and returned to the hydrogen peroxide production zone. The recycling of spent water from the epoxidation reaction zone and the removal of heavy compounds eliminates a low value water stream, and the recovery of heavy hydrocarbons therefrom produces a valuable secondary product. The spent water stream is passed to a separation zone such as an evaporator, a distillation zone or a sorption zone.

US-A 2002/010378 discloses a composite process for subjecting ethylene to catalytic gas phase oxidation thereby obtaining ethylene oxide and causing this ethylene oxide to react with water thereby obtaining ethylene glycol. In the production of ethylene glycol by the supply of the aqueous ethylene glycol solution to a concentrating treatment at the multi-effect evaporator, the method contemplated by US-A 2002/010378 for the production of ethylene glycol comprises utilizing as the source of heating at least one specific step the steam generated in the multi-effect evaporator.

US-A 6,288,287 discloses a process for preparing a glycerol from a crude glycerol composition comprising a glycerol, a diol and water, comprising feeding the crude glycerol composition to a preparation apparatus comprising two or more, serially connected flash towers and a distillation tower connected to a final flash tower, wherein a bottom fraction of each flash tower is fed to a subsequent flash tower.

US-A 5,269,933 and EP-A 0 532 905 disclose a method for the separation of a mixture of an organic fluid and water, such as carboxylic acids including acetic acid and propionic acid, aromatic amines including aniline, phenol, and glycerine. The method is a combination of a distillation, a water-selective pervaporation and a reverse osmosis and is particularly suitable for the separation of glycol and water. The process according to US-A 5,269,933 comprises distilling the mixture, performing a water-selective pervaporation to a bottom product obtained from the distillation step obtaining a residue and a permeate, applying a reverse osmosis step to at least the distillate obtaining a residue and a permeate, and feeding the residue obtained from the reverse osmosis to the distillation step, such that segregated organic fluid is present as residue from the water-selective pervaporation, and segregated water is present as the permeate from the water-selective pervaporation step as well as the permeate from the reverse osmosis step.

According to EP-A 0 324 915, valuable materials can be separated from aqueous solutions by extraction and/or distillation; the solution can be concentrated by reverse osmosis in an upstream step. The valuable materials are separated solely by distillation following concentration of the solution by optionally multi-stage reverse osmosis. According to the process disclosed in EP-A 0 324 915 A, the valuable material leaves the distillation column with the bottom stream or the top stream.

WO-A 01/00534 relates to a process of the treatment of wastewater from an styrene monomer / propylene oxide production process, the treatment process comprising subjecting the wastewater comprising organic contaminants to a freeze concentration treatment followed by a reverse osmosis treatment. EP-A 2 000 197 discloses that a column packed with active charcoal may be disposed before a reverse osmosis membrane for the removal of organic substances, so that clogging and fouling of the membrane is prevented. CN-B 102 188 501 relates to rhubarb anthraquinone components extracting and separating method. WO-A 2014/166821 discloses a method for treating water from the oil and gas industries including produced water from oil and/or gas fields. JP-A 2003/236528 describes a treatment of city water, which contains ethanol, methanol acetone and isopropyl alcohol. US-A 3,810,833 discloses o a process for the removal of dissolved vanadium anion species and an anthraquinone disulphonates/disulphonic acids from an effluent liquor obtained from the autoclave treatment of a sulphur cake produced in a process for removing hydrogen sulphide from fuel gases or liquid hydrocarbons.

US-A 6,712,882 discloses a process for treating wastewater from an industrial process for producing propylene oxide, which process involves the steps of (a) subjecting the wastewater to a multi-effect evaporation treatment resulting in a vapor top fraction and a liquid bottom fraction containing the non-volatile contaminants; and (b) condensing at least part of the vaporous top fraction into a liquid stream which is subject to a stripping treatment resulting in an overhead stream containing volatile waste organic material and purified water as the liquid bottom stream.

Following the production of an olefin oxide and its subsequent downstream processing, the suitably separated wastewater will typically comprise traces of certain oxygenates. One of the strategies to remove the oxygenates in order to comply with the purity standards in case of a reuse or with environmental regulations is subjecting the wastewater to a reverse osmosis treatment. Such a wastewater treatment is described in WO-A 2007/074066 disclosing a process for separating at least one propylene glycol from a mixture (M) comprising water and said propylene glycol, said process comprising (I) evaporating the mixture in at least two evaporation and/or distillation stages at decreasing operating pressures of the evaporators and/or distillation columns obtaining mixture (M') and mixture (M"); and (II) separating the mixture (M') obtained in (I) in at least one further distillation step, obtaining a mixture (M-I) comprising at least 70 weight-% of water and a mixture (M-II) comprising less than 30 weight-% of water.

However, in particular when feeding the wastewater in high-throughput to the reverse osmosis unit, a rapid deactivation of the reverse osmosis membrane can be observed in certain cases, necessitating a frequent and costly regeneration and/or replacement of the reverse osmosis membrane.

Thus, it was an object of the present invention to provide an advantageous process for the treatment of the wastewater which is obtained from a process for the preparation of an olefin oxide, which in particular allows avoiding the problems observed with regard to the reverse osmosis membrane.

According to the present invention, it was surprisingly found that the deactivation of an reverse osmosis membrane used in the wastewater treatment of an aqueous mixture which was obtained from a process for the preparation of an olefin oxide, preferably propylene oxide, can be considerably delayed if upstream the reverse osmosis membrane, preferably directly upstream the reverse osmosis membrane, the aqueous mixture is subjected to an adsorbing stage where at least one organic oxygenate contained in the aqueous mixture is suitably adsorbed at an adsorbing agent.

Therefore, the present invention provides a process for reducing the total organic carbon (TOC) in an aqueous mixture M1 obtained as wastewater from a process for the preparation of an olefin oxide, the process for reducing the TOC comprising:
(a) contacting the mixture M1 which contains at least one oxygenate having from 1 to 16 carbon atoms with an adsorbing agent and adsorbing at least a portion of an oxygenate at the adsorbing agent;
(b) separating an aqueous mixture M2 from the adsorbing agent, the mixture M2 being depleted of the oxygenate adsorbed in (a);
(c) separating an oxygenate from the mixture M2 obtained in (b) by subjecting the mixture M2 to reverse osmosis in at least one reverse osmosis unit containing a reverse osmosis membrane obtaining an aqueous mixture M3 being depleted of this oxygenate, wherein the at least one oxygenate contained in the mixture M1 is selected from the group consisting of alcohols, ethers, aldehydes, ketones, and combinations of two or more thereof; wherein an oxygenate adsorbed in (a) is anthraquinone and/or an anthraquinone derivative; wherein the anthraquinone derivative is selected from the group consisting of C2-C5 alkyl anthraquinones and combinations of two or more thereof; and wherein the anthraquinone and/or anthraquinone derivative is contained in mixture M1 in an amount in the range of from 1 to 100 weight-ppb relative the total weight of the mixture M1, wherein at least 80 % of the anthraquinone and/or the anthraquinone derivative contained in the mixture M1 are adsorbed in (a).

By employing this upstream adsorption stage according to the present invention, the running time of a reverse osmosis unit could be significantly increased, and thus, the frequent and costly regeneration and/or replacement of the reverse osmosis membrane could be avoided. Therefore, the overall process of the treatment of the wastewater obtained from a process for the preparation of an olefin oxide and the wastewater treatment could be increased with respect to its ecological and economic characteristics which are of great importance in particular regarding large-scale process such as the production of olefin oxides, in particular propylene oxide.

### Step (a)

Step (a) of the process of the present invention comprises contacting a mixture M1 obtained as wastewater from a process for the preparation of an olefin oxide, the mixture M1 containing at least one oxygenate having from 1 to 16 carbon atoms, with an adsorbing agent and adsorbing at least a portion of an oxygenate at the adsorbing agent for reducing the total organic carbon (TOC) in the mixture M1.

The term "TOC" as used in the present invention is the amount of carbon bound in an organic compound present in aqueous systems. The TOC determination is usually a two step process, comprising acidifying a sample and flushing with nitrogen or helium for removing inorganic carbon in the form of CO₂, followed by complete oxidation of the remaining organic carbon sources also to CO₂. The CO₂ originating from organic carbon sources may be detected via a conductivity or infrared measurement. Complete oxidation of the organic compounds is achieved by combustion, photo-oxidation or persulfate oxidation. Preferably, the TOC according to the present invention is to be understood as being determined according to DIN EN 1484.

Generally, the water content of the mixture M1 is not subject to specific restrictions. Preferably, the aqueous mixture M1 contains water in an amount of at least 95 weight-%, more preferably at least 98 weight-%, more preferably at least 99 weight-%, more preferably at least 99.4 weight-% relative to the total weight of the aqueous mixture M1.

Generally, the content of the mixture M1 with regard to the at least one oxygenate is not subject to specific restrictions. Preferably, the aqueous mixture M1 contains the at least one oxygenate in an amount of at most 1 weight-%, more preferably at most 0.5 weight-%, more preferably at most 0.3 weight-%, more preferably at most 0.2 weight-%, relative to the total weight of the aqueous mixture M1. More preferably, the aqueous mixture M1 contains the at least one oxygenate in an amount in the range of from 0.01 to 1 weight-%, preferably from 0.01 to 0.5 weight-%, more preferably from 0.01 to 0.3 weight-%, more preferably from 0.01 to 0.2 weight-%.

The term "oxygenate" as used according to the present invention is defined as a chemical compound containing oxygen as part of its chemical structure. The at least one oxygenate contained in the mixture M1 has from 1 to 16 carbon atoms, preferably from 1 to 12 carbon atoms, more preferably from 1 to 10 carbon atoms. Further preferred ranges may include 2 to 10 carbon atoms or from 4 to 12 carbon atoms or from 4 to 16 carbon atoms or from 5 to 16 carbon atoms.

The oxygenate contained in mixture M1 is selected from the group consisting of alcohols, ethers, aldehydes, ketones, and combinations of two or more thereof.

Anthraquinone derivatives are selected from the group consisting of C₂-C₅ alkyl anthraquinones, preferably selected from the group consisting of 2-ethyl anthraquinone, tetrahydro-2-ethyl anthraquinone, 2-isopropylanthraquinone, 2-sec-butylanthraquinone, 2-t-butylanthraquinone, 2-sec-amylanthraquinone, 1,3-dimethylanthraquinone, 2,3-dimethylanthraquinone, 1,4-dimethylanthraquinone, 2,7-dimethylanthraquinone, amylanthraquinone, tetrahydroamylanthraquinone, and combinations of two or more thereof.

One source of the anthraquinone and/or the anthraquinone derivatives is hydrogen peroxide which is preferably used as epoxidation agent for the preparation of the olefin oxide from the respective olefin, preferably for the preparation of propylene oxide from propene, optionally admixed with propane.

Hydrogen peroxide is produced almost exclusively via the anthraquinone process. This process is based on the catalytic hydrogenation of an anthraquinone and/or a derivative thereof to form the corresponding anthrahydroquinone compound. The anthrahydroquinone compound is further reacted with oxygen to form hydrogen peroxide which is subsequently extracted with water. The cycle is restarted by rehydrogenation of the anthraquinone compound which has been formed again in the oxidation. It is conceivable that in the extraction of hydrogen peroxide traces of the anthraquinone compound may pass over into the water phase. According to the present invention, it is preferred to employ a hydrogen peroxide which is obtained as crude hydrogen peroxide solution by extraction of a mixture which results from a process known as anthraquinone process by means of which virtually the entire world production of hydrogen peroxide is produced. Reference is made to Ullmann's Encyclopedia of Industrial Chemistry, 5th edition, volume A 13 (1989) pages 443-466, wherein a solution of an anthraquinone is used containing an alkyl group preferably having of from 2 to 10 carbon atoms, more preferably at least 5 carbon atoms such as 5 carbon atoms or 6 carbon atoms and where the solvent used usually consists of a mixture of two different solvents. This solution of the anthraquinone is usually referred to as the working solution. In this process, the hydrogen peroxide formed in the course of the anthraquinone process is generally separated by extraction from the respective working solution after a hydrogenation/re-oxidation cycle. Said extraction can be performed preferably with essentially pure water, and the crude aqueous hydrogen peroxide solution is obtained. While it is generally possible to further purify the thus obtained crude aqueous hydrogen peroxide solution by distillation, it is preferred, according to the present invention, to use such crude aqueous hydrogen peroxide solution which has not been subjected to purification by distillation. Further, it is generally possible to subject the crude aqueous hydrogen peroxide solution to a further extraction stage wherein a suitable extracting agent, preferably an organic solvent is used. More preferably, the organic solvent used for this further extraction stage is the same solvent which is used in the anthraquinone process. Preferably the extraction is performed using just one of the solvents in the working solution and most preferably using just the most non-polar solvent of the working solution. In case the crude aqueous hydrogen peroxide solution is subjected to such further extraction stage, a so-called crude washed hydrogen peroxide solution is obtained.

Surprisingly, it was found that even traces of anthraquinone and/or derivatives thereof present in the wastewater considerably contribute to the deactivation of the RO membrane. This was an unexpected finding since anthraquinone and/or anthraquinone derivatives may be merely present in concentrations the weight-ppb (weight parts per billion) range in the wastewater compared with other compounds such as glycols which may be present in concentrations which are by several order of magnitude higher.

According to the present invention, it was surprisingly found that in the adsorbing stage (b) of the present invention, anthraquinone and/or anthraquinone derivatives which are present in the mixture M1, preferably in case the process for the preparation of an olefin oxide is carried out using hydrogen peroxide as epoxidation agent and the hydrogen peroxide is prepared via the anthraquinone process, are selectively adsorbed and thus retained, and although the concentration of anthraquinone and/or anthraquinone derivatives is typically very low, in the range of from 1 to 100 weight-ppb (weight parts per billion), the adsorption of these low amounts of anthraquinone and/or anthraquinone derivatives in stage (b) can prevent the reverse osmosis membrane from being rapidly deactivated.

Further oxygenates which may be contained in mixture M1 are preferably selected from the group consisting of formaldehyde, formaldehyde dimethyl acetal, acetaldehyde dimethyl acetal, methyl formate, formic acid, acetic acid, and combinations of two or more thereof.

As already mentioned, the hydrogen peroxide used in the preparation of olefin oxides may comprise traces of anthraquinone and/or anthraquinone derivatives. For example, in case propene is reacted with the aqueous hydrogen peroxide solution in the presence of an organic solvent such as methanol or acetonitrile, typically a mixture is obtained comprising the organic solvent, propylene oxide, water, and oxygenate byproducts such as propylene glycol and impurities such as anthraquinone and/or anthraquinone derivatives are obtained. Conveniently, the individual components are separated from propylene oxide depending on their boiling points according to any suitable technique, preferably by evaporation, stripping, distillation, or a combination of two or more thereof. Water having a comparatively high boiling point is usually separated in one or more late stages of the downstream processing. Thereby, a waste water fraction comprising anthraquinone and/or anthraquinone derivatives is obtained which corresponds to the aqueous mixture M1 according to the present invention.

Anthraquinone and/or anthraquinone derivatives are contained in mixture M1 in an amount in the range of from 1 to 100 weight-ppb (weight parts per billion), preferably from 2 to 80 weight-ppb, more preferably from 3 to 60 weight-ppb relative the total weight of the mixture M1.

Therefore, the aqueous mixture M1 preferably contains water in an amount of at least 95 weight-%, more preferably at least 98 weight-%, more preferably at least 99 weight-%, more preferably at least 99.4 weight-% relative to the total weight of the aqueous mixture M1, wherein the aqueous mixture M1 additionally contains at least two oxygenates in an amount in the range of from 0.01 to 1 weight-%, preferably from 0.01 to 0.5 weight-%, more preferably from 0.01 to 0.3 weight-%, more preferably from 0.01 to 0.2 weight-%, wherein at least one of the at least two oxygenates is anthraquinone and/or an anthraquinone derivative which is contained in the aqueous mixture M1 in an amount in the range of from 1 to 100 weight-ppb, and wherein the at least another one of the at least two oxygenates is selected from the group consisting of methanol, ethanol, propanol, methoxypropanol (MOP), monopropylene glycol (MPG), dipropylene glycol (DPG), tripropylene glycol (TPG), dipropylene glycol methyl ether (DPGME), tripropylene glycol monomethyl ether (TPGME), acetaldehyde, and hydroxyacetone, the anthraquinone derivative preferably being selected from the group consisting of 2-ethyl anthraquinone, tetrahydro-2-ethyl anthraquinone, 2-isopropylanthraquinone, 2-sec-butylanthraquinone, 2-t-butylanthraquinone, 2-sec-amylanthraquinone, 1,3-dimethylanthraquinone, 2,3-dimethylanthraquinone, 1,4-dimethyl-anthraquinone, 2,7-dimethylanthraquinone, amylanthraquinone, tetrahydroamylanthraquinone, and combinations of two or more thereof.

As far as the adsorbing agent used according to (a) is concerned, no specific restrictions exist, provided that at least one oxygenate can be adsorbed thereto in the desired amount. Preferably, the adsorbing agent according to (a) is selected from the group consisting of activated carbon, an organic polymer, a silica gel, a molecular sieve, and a combination of two or more thereof.

Activated carbon may be provided as powder or granules following carbonization and activation of carbonaceous source materials.

Organic polymers which may be used as adsorbing agent are preferably microspheres having a diameter of from 0.3 to 0.8 mm with various pore dimensions and surface areas. Organic polymer adsorbing agents are typically obtained by means of styrene, acrylate and divinyl benzene polymerization or copolymerization, having a porous structure that allows the reversible adsorption of organic compounds. Preferably, the organic polymer used in the present invention is a polystyrene-based polymer. More preferably the organic polymer is polystyrene cross-linked with divinyl benzene.

Silica gel is a porous and amorphous form of SiO₂ and may be obtained as powder, granules or beads. It is usually prepared by the reaction between sodium silicate and acetic acid, which is followed by a series of after-treatment processes such as aging, pickling, etc. These after-treatment methods result in various pore size distributions. The hydroxyl (OH) groups on the surface of silica can be functionalized to afford specialty silica gels that exhibit specific chemical and physical properties.

A molecular sieve may be a natural or synthetic crystalline aluminosilicates which has a repeating pore network. Synthetic molecular sieves can be manufactured by hydrothermal synthesis in an autoclave possibly followed by ion exchange with certain cations such as Na⁺, Li⁺, Ca²⁺, K⁺, or NH₄⁺. Molecular sieves with various pore size distributions may be obtained. The ion exchange process can be followed by drying of the obtained material, which can be optionally pelletized with a binder to form macroporous pellets.

Preferably, the adsorbing agent used according to (a) has a total pore volume in the range of from 0.1 to 3 cm³/g, more preferably from 0.2 to 2.5 cm³/g, more preferably from 0.5 to 1.5 cm³/g, determined according to DIN 66134.

Preferably, the adsorbing agent used according to (a) has a mean pore size in the range of from 5 to 900 Angstrom (1 Angstrom = 10⁻¹⁰ m), more preferably from 10 to 600 Angstrom, more preferably from 12 to 300 Angstrom, more preferably from 15 to 100 Angstrom, more preferably from 17 to 70 Angstrom, determined according to DIN 66134.

Preferably, the adsorbing agent used according to (a) has a BET surface area in the range of from 500 to 1500 m²/g, more preferably from 800 to 1450 m²/g, more preferably from 900 to 1400 m²/g, determined according to DIN 66131.

Generally, the contacting in (a) may be carried out in any appropriate way. The contacting may be for example carried out in batch mode or in a semi-continuous mode. It is preferred that the contacting in (a) is performed in continuous mode. Preferably, the adsorbing agent is provided as a stationary bed in a suitable container equipped with suitable filters or frits to avoid the loss of the stationary bed. The container is preferably made of one or more materials which are inert under the contacting conditions in (a). By way of example, glass or stainless steel may be mentioned.

The container in which the adsorbing agent is provided is preferably a tube or column, and is preferably further equipped with pumps, detectors, cooling means, feeding and removal means. Preferably, a container which comprises the adsorbing agent and which is further equipped with pumps, detectors, cooling means, feeding and removal means forms an adsorbing unit used in (a). Preferably, the mixture M1 is introduced in such an adsorbing unit and is passed over the adsorbing agent at a defined flow rate, thereby becoming depleted of an oxygenate. Thus, the mixture M2 is obtained.

Regarding the flow rate of the mixture M1 subjected to contacting in (a), no specific restrictions exist. Preferably, the contacting in (a) is performed at a bed volume (BV) in the range of from 0.01 to 20 h⁻¹, more preferably from 0.05 to 10 h⁻¹, more preferably from 0.1 to 7 h⁻¹, more preferably from 0.3 to 6 h⁻¹, more preferably from 0.5 to 5 h⁻¹, wherein the bed volume (BV) is defined as the ratio of the flow rate of the mixture M1 in liter/h relative to the volume of the adsorbent in liter.

Preferably, the contacting in (a) is performed at a pressure in the range of from 0.7 to 20 bar, preferably from 0.8 to 15 bar, more preferably from 0.9 to 10 bar, more preferably from 1 to 5 bar.

Preferably, the contacting in (a) is performed at a temperature in the range of from 5 to 80 °C, preferably from 10 to 60 °C, more preferably from 15 to 45 °C. Preferably, the contacting is performed at ambient temperature.

Preferably, the contacting in (a) is carried out using 1 to 8 adsorbing units. The contacting in (a) is preferably carried out using 2 to 8 adsorbing units connected in series, preferably using 2 to 6 adsorbing units, such as 2, 3, 4, 5 or 6 adsorbing units connected in series.

### Step (b)

According to step (b) of the present invention, an aqueous mixture M2 is separated from the adsorbing agent, wherein the mixture M2 is depleted of the oxygenate adsorbed in (a).

Preferably, the separating in (b) of the aqueous mixture M2 from the adsorbing agent is obtained by means selected from the group consisting of filtration, centrifugation, decantation, evaporation, and combinations of two or more thereof. More preferably, the aqueous mixture M2, which is obtained following contacting mixture M1 with the adsorbing agent, is separated from the adsorbing agent by filtration, preferably by filtration following passing the mixture M1 over the adsorbing agent preferably comprised as stationary bed in a container provided with filters or frits.

At least one oxygenate adsorbed in (a) is anthraquinone and/or an anthraquinone derivative, wherein at least 80 %, preferably at least 90 %, more preferably at least 95 %, more preferably at least 99 % of the anthraquinone and/or the anthraquinone derivative contained in the mixture M1 are adsorbed in (a).

The inventors surprisingly found out that by contacting mixture M1 according to step (a) a mixture M2 is obtained which is considerably depleted of anthraquinone and/or anthraquinone derivatives. Specific results showed that by using adsorbents such as activated carbon or polystyrenic resins, anthraquinone and/or anthraquinone derivatives could be retained for at least 2000 hours (about 83 days) at the adsorbing agent. Thus, when passing the mixture M1 at a suitable flow rate over the adsorbing agent, the mixture M2 did not contain anthraquinone and/or anthraquinone derivatives at detectable levels for at least 2000 hours. Thus, for at least 2000 hours the reverse osmosis membrane in the reverse osmosis unit according to (c) did not come into contact with the anthraquinone and/or anthraquinone derivatives.

It was further found out that the adsorbing agents according to the present invention also essentially completely adsorbed glycol ethers contained in the mixture M1, such as MPG, DPGME or TPGME, which glycol ethers are usually retained by the reverse osmosis unit. Being normally contained in relatively high amounts of from about 0.1 to about 0.5 weight-% in the mixture M1, a break-through of the glycol ethers could be observed after a time period in the range of from about 2 to about 25 hours when using activated carbon or polystyrenic resin as adsorbents. Highly surprising, however, anthraquinone and/or anthraquinone derivatives where still retained far beyond the time at which the adsorbent was already exhausted by glycol ethers. The adsorbents thus turned out to be extremely useful to protect a reverse osmosis unit from detrimental components such as anthraquinone and/or anthraquinone derivatives over a long period of time even in the presence of several orders of magnitude higher amounts of oxygenates competing for a binding to the adsorbing agent.

Further, since for a certain period of time, also other oxygenates are retained according to (b), it is conceivable but not covered by the present invention - to use an adsorbing agent, preferably selected from the group consisting of activated carbon, an organic polymer, a silica gel, a molecular sieve, and combinations of two or more thereof, wherein the organic polymer is preferably a polystyrene-based polymer, for replacing a reverse osmosis unit in the treatment of wastewater obtained from a process for the preparation of an olefin oxide, preferably propylene oxide, preferably in the time slot in which a first, preferably at least partially spent reverse osmosis unit downstream of said adsorbing agent is taken out of operation and a second, preferably fresh reverse osmosis unit is taken into operation downstream of said adsorbing agent as, replacing the first reverse osmosis unit.

After the contacting in (a), the TOC of the mixture M2 obtained in (b) relative to the TOC of the mixture M1 is reduced. The TOC of the mixture M2 will depend on the exhaustion state of the adsorbing agent. The TOC of the mixture M2 obtained in (b) may be at most 95 %, such as at most 90 %, at most 50 %, or at most 10 % of the TOC of mixture M1. Generally, it is conceivable that the TOC of the mixture M2 obtained in (b) is at most 0.2 %, such as at most 0.1 %, at most 0.06 %, or at most 0.02 %, of the TOC of mixture M1.

Thus, it was also found that in particular in its fresh state, the adsorbing agent according to the present invention can replace the reverse osmosis unit over a certain period of time. This finding could be very important in particular in large-scale processes where after a certain period of time, an reverse osmosis unit has to be taken out of operation, for example for replacing or regenerating the respective reverse osmosis membrane. In case no parallel reverse osmosis unit is available to which the respective wastewater stream can be switched without interruption of the continuous process, it is conceivable but not covered by the present invention - that the adsorbing agent according to the present invention can take the role of the reverse osmosis unit for that period of time during which a spent reverse osmosis unit is removed from the stream and a new reverse osmosis unit is taken into operation, since the adsorbing agent, as described, may remove also oxygenates other than anthraquinone and/or anthraquinone derivatives from the mixture M1.

Therefore, it is conceivable - but not covered by the present invention - that an adsorbing agent, preferably selected from the group consisting of activated carbon, an organic polymer, a silica gel, a molecular sieve, and combinations of two or more thereof, wherein the organic polymer is preferably a polystyrene-based polymer, could be used for replacing a reverse osmosis unit in the treatment of wastewater obtained from a process for the preparation of an olefin oxide, preferably propylene oxide, preferably in the time slot in which a first, preferably at least partially spent reverse osmosis unit downstream of said adsorbing agent is taken out of operation and a second, preferably fresh reverse osmosis unit is taken into operation downstream of said adsorbing agent as, replacing the first reverse osmosis unit.

### Step (c)

According to step (c) of the present invention, an oxygenate from the mixture M2 obtained in (b) is separated by subjecting the mixture M2 to reverse osmosis in at least one reverse osmosis unit containing a reverse osmosis membrane obtaining an aqueous mixture M3 being depleted of this oxygenate.

Preferably, the reverse osmosis membrane according to (c) is selected from the group consisting of a tubular membrane, a capillary membrane, a spiral membrane, a hollow fiber membrane, and a combination of two or more thereof.

Tubular membranes are non-self-supporting membranes. They are located on the inside of a tube, made of a material which is the supporting layer for the membrane. Because the location of tubular membranes is inside a tube, the flow in a tubular membrane is usually inside out. Tubular membranes generally have a diameter of about 5 to 15 mm.

With capillary membranes the membrane serves as a selective barrier, which is sufficiently strong to resist filtration pressures. Because of this, the flow through capillary membranes can be both inside out and outside in. The diameter of capillary membranes is much smaller than that of tubular membranes, namely 0.5 to 5 mm. Because of the smaller diameter the chances of plugging are much higher with a capillary membrane.

Spiral membranes consist of two layers of membrane, placed onto a permeate collector fabric. This membrane envelope is wrapped around a centrally placed permeate drain. This causes the packing density of the membranes to be higher. The feed channel is placed at moderate height, to prevent plugging of the membrane unit.

The pressurized mixture flows along the external surface of the membrane sleeves. A solution penetrates and flows within the spiral sleeve towards the central pipe that leads it out of the module.

Membranes that consist of flat plates are called pillow-shaped membranes. The name pillow-shaped membrane comes from the pillow-like shape that two membranes have when they are packed together in a membrane unit. Inside the 'pillow' is a supporting plate, which attends solidity.

Within a module, multiple pillows are placed with a certain distance between them, which depends on the dissolved solids content of the solution. The solution flows through the membranes inside out. After the treatment , the permeate is collected in the space between the membranes, where it is carried away preferably through drains.

According to the present invention, a hollow fiber membrane is to be understood as a membrane having a diameter of at most 0.15 micrometer, preferably at most 0.12 micrometer, more preferably at most 1.0 micrometer.

As membranes, all membranes with a sufficient stability against organic compounds for example membranes having a celluloseacetate, composite or polyamide active layer can be used. Preferably membranes with polyamide active layer as spiral membrane modules are used.

Preferably, the reverse osmosis in (c) is performed in continuous mode.

Preferably, the subjecting in (c) is performed at a permeate flow in the range of from 1 to 20 kg·m⁻²·h⁻¹, more preferably from 2 to 15 kg·m⁻²·h⁻¹, more preferably from 5 to 10 kg·m⁻²·h⁻¹.

Preferably, the subjecting in (c) is performed at a pressure in the range of from 2 to 100 bar, more preferably of from 5 to 80 bar, more preferably of from 10 to 60 bar, more preferably of from 20 to 50 bar.

Preferably, the subjecting in (c) is performed at a temperature in the range of from 5 to 80 °C, more preferably from 10 to 60 °C, more preferably from 15 to 50 °C.

According to the present invention, the separation step by means of reverse osmosis is preferably carried out using 1 to 8 reverse osmosis units. Reverse osmosis is preferably carried out using 2 to 8 reverse osmosis units connected in parallel, preferably using 4 to 6 reverse osmosis units, for example 5 reverse osmosis units.

In each stage, the weight ratio of the feed relative to retentate is preferably from 10 to 60, for example from 15 to 30.

Preferably, the TOC of the mixture M3 obtained in (c) is at most 0.1 %, more preferably at most 0.08 %, more preferably at most 0.05 %, more preferably at most 0.01 % of the TOC of mixture M1.

### Step (d)

The process of the present invention preferably further comprises
(d) submitting the mixture M3 obtained in (c) to a biological wastewater treatment.

By submitting the mixture M3 obtained in (c) to a biological wastewater treatment, the TOC is preferably even further reduced.

Other chemical measures of water quality except the TOC include dissolved oxygen (DO), chemical oxygen demand (COD), biochemical oxygen demand (BOD), total dissolved solids (TDS), pH, nutrients (nitrates and phosphorus), heavy metals and pesticides.

Specific maximum limits for these parameters are determined by the intended use (e.g. human consumption, industrial use or environment) of the treated water and are set by the responsible authorities on the basis of widely accepted guidelines. Industrial wastewater which is following a biological treatment within set standards may be for example reused or safely released into an appropriate watercourse.

Biological wastewater treatment is based on the natural role of bacteria to close the elemental cycles (e.g. C, N, P). In a wastewater treatment plant naturally occurring microorganisms may be used. By engineering the system, natural limitations for bioconversion such as limited aeration and limited amount of biomass can be overcome. Furthermore, the design of biological processes is based on the creation and exploitation of ecological niches that select for microorganisms best adapted to reproduce under such environmental conditions. Selective pressure may arise from various conditions of availability of electron donor (most often organic matter), electron acceptor (such as oxygen or nitrate), nutrients, pH, temperature, or other conditions.

Organisms found in wastewater and wastewater treatment plants include mainly microorganisms (viruses, bacteria, protozoa) and some higher organisms (algae, plants, animals).

Preferably, the biological wastewater treatment in (d) comprises contacting mixture M3 with aerobic and/or anaerobic microorganisms.

Heterotrophic aerobic microorganisms oxidize organic substances with the aid of oxygen to CO₂ or some other metabolic product, thereby utilizing organic materials as a carbon source for creating new cell substance. Other metabolic processes of interest include ammonification, nitrification, denitrification, and phosphorus elimination.

Biodegradation of organic compounds is usually achieved by treatment processes such as activated sludge, trickling filter or a combination thereof. Specifically, one or more activated sludge units and/or one or more trickling filter units may be connected in series.

The activated sludge process comprises combining of wastewater comprising organic carbon with air and a biological floc comprising the microorganisms. The general arrangement of an activated sludge process for removing organic carbon includes an aeration tank where air (or oxygen) is injected in the wastewater containing the biological floc and a settling tank to allow the biological flocs to settle, thus separating the microorganisms from the clear treated water. Treatment of nitrogenous matter or phosphate would involve additional steps where wastewater containing the biological floc is left in anoxic conditions (no residual dissolved oxygen).

The trickling filter process comprises passing the wastewater over a fixed bed of porous materials with a high surface area such as rocks, coke or plastic foam covered with a layer of microorganisms. Aerobic conditions are maintained by splashing, diffusion, and either by forced air flowing through the bed or natural convection of air if the filter medium is porous. The biofilm on the trickling filter itself is not homogeneous. The aerobic surface layer consumes mainly the organic carbon and oxygen. Below this layer is an anoxic layer (oxygen-free), in which denitrification occurs, or even an anaerobic layer. As the biofilm layer thickens, it eventually sloughs off into the treated wastewater. Typically, a trickling filter is followed by a clarifier or sedimentation tank for the separation and removal of the sloughing.

The biosolids separated from the wastewater an activated sludge or trickling filter process are further treated by submitting to anaerobic and/or aerobic digestion.

It is conceivable that for the reduction of the TOC in wastewater originating from an epoxidation reaction, suitable microorganisms must be present which are capable to degrade the specific organic compounds comprised therein. For that, naturally occurring microorganisms adapt themselves to these substrates over time. The adaptation is based by regulation or activation of enzymes present, induction or new formation of enzymes, appearance of new bacteria by mutation and/or plasmid transfer, and selection and growth of adapted microorganisms. In the meantime a number of microorganisms have been identified which are capable to degrade organic compounds such as glycols or glycol ethers.

### Preparation of the olefin oxide

As already mentioned, different variants of a process for the preparation of an olefin oxide, preferably by reacting an olefin with an aqueous hydrogen peroxide solution in the presence of an organic solvent and a heterogeneous catalyst may be established. Also, the downstream processing may be altered and adapted according to the individual requirements and already existing settings. This implies that wastewater representing a mixture M1 subjected to the purification process of the present invention may be obtained and collected following different reaction and workup routes.

The reaction of the olefin with hydroperoxide in an organic solvent catalyzed by a heterogeneous catalyst takes place in a reactor suitable for this purpose. The starting materials can be introduced individually into the reactor or preferably be combined to form a single stream before being fed into the reactor. Starting materials are olefin, preferably propene, organic solvent, preferably methanol and/or acetonitrile, and hydroperoxide, preferably an aqueous hydrogen peroxide solution.

The term "a reactor" is not restricted to a single vessel. Rather, it is also possible to use a cascade of stirred vessels as reactor. Preference is given to using fixed-bed reactor as reactors. The fixed-bed reactors used are more preferably fixed-bed tube reactors. Preferably, the fixed-bed reactor comprises the heterogeneous catalyst. The heterogeneous catalyst is typically present in the form of extrudates or pressed pellets.

The heterogeneous catalyst contains preferably at least one a zeolite catalyst. As far as the at least one zeolite catalyst is concerned, generally not limitations exist. Preferably, a zeolite containing titanium is employed. Such titanium zeolites have preferably a crystalline structure selected from the group consisting of MFI, MEL, MWW, BEA or mixed structures thereof. Further preferred are zeolite catalysts containing titanium that are referred to, in general, as "TS-1", "TS-2" or "TS-3", as well as zeolites containing titanium displaying a structure that is isomorphous to zeolite beta.

The downstream processing of the reaction mixture obtained by reacting an olefin with hydroperoxide in an organic solvent catalyzed by a heterogeneous catalyst is preferably a combination of suitable separation steps, such as condensation, compression, vaporization, stripping, or distillation. The separation is generally regulated by controlling temperature and pressure of the reaction mixture. The separation may be carried out using any apparatus known to a person skilled in the art for this purpose. It may be carried out either continuously or batchwise. Conveniently, for the separation of the individual compounds a succession of apparatuses such as heat exchangers, compressors, evaporators, stripping columns or distillation columns or may be used. In addition, individual compounds may be chemically converted into a more easily removable compound prior to separation.

Heat exchangers can have essentially any configuration. Examples of configurations are shell- and-tube heat exchangers, coil heat exchangers or plate heat exchangers. As coolant any conceivable medium can be employed. Preferred coolants are, among others, common river water or secondary coolants such as secondary cooling water.

Example for suitable compressors are piston compressors, diaphragm compressors, screw compressors and rotary compressors. It is possible to use different apparatuses for each compression step.

Vaporizers are used to turn selectively a compound from a liquid mixture into its gaseous form which is removed form the rest of the mixture and condensed. Suitably, a forced circulation vaporizer may be employed, wherein a pump is used to increase circulation of the vapor to be condensed and separated in the apparatus. Alternatively, flash evaporation may be employed. Flash evaporation is the partial vapor that occurs when a saturated liquid stream undergoes a reduction in pressure by passing through a throttling device. If the throttling device is located at the entry into a pressure vessel so that the flash evaporation occurs within the vessel, then the vessel is often referred to as a flash drum. If the saturated liquid is a multi-component liquid, the flashed vapor is richer in the more volatile components than is the remaining liquid mixture.

Stripping is a separation process wherein one more components are removed from a liquid mixture by a vapor stream. In industrial applications the liquid and vapor streams usually have cocurrent or countercurrent flows. Stripping may be carried out using packed or trayed columns to increase to contact area between the liquid phase usually introduced at the top of the column and flowing downwards and the gas phase usually introduced at the bottom and exiting at the top.

Preferred distillation applications include both batch and continuous fractional, vacuum, azeotropic, extractive, and steam distillation. It is possible to use different distillation applications for each separation step. Preferably, the distillation is performed in continuous mode. Preferably, the distillation is selected from the group consisting of continuous fractional distillation and continuous extractive distillation.

In fractional distillation, a mixture is heated up and introduced into a distillation column. On entering the column, the feed starts flowing down but part of it, the component(s) with lower boiling point(s), vaporizes and rises. As it rises, it cools and while part of it continues up as vapor, a part which is enriched in the less volatile component begins to descend again. Preferably, for an improved separation, the fractional distillation is performed in a packed column containing random packing or ordered packing or as a tray column. Preferably, for further improving the separation, reflux is used in fractional distillation, wherein a portion of the condensed overhead liquid product is returned to the distillation column.

The method of extractive distillation uses generally a separation solvent which has a high boiling point and is miscible with the mixture to be separated, but does not form an azeotropic mixture. Preferably, the extractive distillation is performed in counter current, wherein the liquid separation solvent is introduced at the upper part of a separation column and a gaseous compound mixture is introduced at the lower part of the separation column. The solvent interacts differently with the components of the mixture thereby causing their relative volatilities to change. This enables the new three-part mixture to be separated by normal distillation. The original component with the greatest volatility is separated as top product. The bottom product consists of a mixture of the solvent and the other component, which can again be separated easily because the solvent does not form an azeotrope with it. For an improved separation, the extractive distillation is preferably performed in packed column containing random packing or ordered packing or as a tray column. Preferably, for a further improved separation, a portion of the mixture of the solvent and the other component is recirculated into the column above the section wherein the gaseous compound mixture is introduced.

According to the present invention, preferably, the process for the preparation of an olefin oxide is a process for the preparation of propylene oxide and comprises
(i) providing a mixture comprising an organic solvent, preferably methanol or acetonitrile, more preferably methanol, propene, optionally propane, an epoxidation agent, preferably hydrogen peroxide, more preferably hydrogen peroxide prepared according to an anthraquinone process;
(ii) subjecting the mixture provided in (i) to epoxidation conditions in the presence of a catalyst, the catalyst preferably comprising a titanium zeolite, more preferably comprising a titanium silicalite-1 or a titanium zeolite having MWW framework structure, more preferably comprising a titanium silicalite-1, obtaining a mixture comprising the organic solvent, propylene oxide, water, at least one oxygenate as defined above preferably including anthraquinone and/or an anthraquinone derivative, optionally propene, and optionally propane;
(iii) optionally separating propene and propane from the mixture obtained from (ii) obtaining a mixture being depleted of propene and optionally propane, and comprising water, propylene oxide, the organic solvent, at least one oxygenate as defined above preferably including anthraquinone and/or an anthraquinone derivative and preferably including propylene glycol;
(iv) separating propylene oxide from the mixture obtained in (ii) or (iii), preferably from the mixture obtained in (iii), obtaining a mixture being depleted of propylene oxide and comprising water, the organic solvent, at least one oxygenate as defined above preferably including anthraquinone and/or an anthraquinone derivative and preferably including propylene glycol;
(v) separating the organic solvent from the mixture obtained in (iv), obtaining a mixture being depleted of the organic solvent and comprising water, at least one oxygenate as defined above preferably including anthraquinone and/or an anthraquinone derivative and preferably including propylene glycol;
(vi) preferably subjecting the mixture obtained in (v) to a propylene glycol removal stage, preferably comprising
   (I) evaporating the mixture in at least two evaporation and/or distillation stages at decreasing operating pressures of the evaporators and/or distillation columns obtaining a mixture (M') and a mixture (M");
   (II) separating the mixture (M') obtained in (I) in at least one further distillation step, obtaining a mixture (M-I) being enriched in water, preferably comprising at least 70 weight-% of water, and a mixture (M-II) being depleted of water, preferably comprising at most 30 weight-% of water;
   (III) separating propylene glycol from the mixture (M-II) in at least one further distillation step obtaining a mixture being depleted of propylene glycol and comprising water and at least one oxygenate as defined above preferably including anthraquinone and/or an anthraquinone derivative;
wherein the mixture obtained from (v) or the mixture obtained from (vi)(III), preferably the mixture obtained from (vi)(III), is the aqueous mixture M1.

In step (iii), unreacted propene and optionally propane may be separated from the mixture obtained from (ii) thereby obtaining a mixture being depleted of propene and optionally propane and comprising water, propylene oxide, the organic solvent, at least one oxygenate as defined above preferably including anthraquinone and/or an anthraquinone derivative and preferably including propylene glycol. The depletion of the mixture obtained from (ii) of propene and optionally propane may be accomplished in different ways. Preferably, propene and optionally propane are separated by submitting the mixture obtained from (ii) to fractional distillation, thereby obtaining an overhead product enriched in propene and optionally propane and a bottom product depleted of propene and optionally propane and comprising water, propylene oxide, the organic solvent, at least one oxygenate as defined above preferably including anthraquinone and/or an anthraquinone derivative and preferably including propylene glycol. In the alternative, the reaction mixture obtained from (ii) is preferably separated in an evaporator into an overhead product enriched in propene and optionally propane and a bottom product depleted of propene and optionally propane and comprising water, propylene oxide, the organic solvent, at least one oxygenate as defined above preferably including anthraquinone and/or an anthraquinone derivative and preferably including propylene glycol. It is conceivable that propene and optionally propane may also be separated by extractive distillation using a hydrocarbon with a boiling point of about 200 to 300 °C as adsorbent. The separation of propene and optionally propane is carried out under the general conditions in respect of pressure, temperature and residence time with which a person skilled in the art is familiar.

In step (iv), propylene oxide is separated from the mixture obtained in (ii) or (iii), preferably from the mixture obtained in (iii), thereby obtaining a mixture being depleted of propylene oxide and comprising water, the organic solvent, at least one oxygenate as defined above preferably including anthraquinone and/or an anthraquinone derivative and preferably including propylene glycol. Preferably, the propylene oxide is separated by submitting the mixture obtained in (ii) or (iii), preferably the mixture obtained in (iii) to distillation, thereby obtaining an overhead product enriched in propylene oxide and a bottom product depleted of propylene oxide and comprising water, the organic solvent, at least one oxygenate as defined above preferably including anthraquinone and/or an anthraquinone derivative and preferably including propylene glycol. Preferably, the propylene oxide is separated by extractive distillation. In this connection, the mixture obtained (ii) or (iii), preferably in (iii), is added to the middle section of an extractive distillation column and a polar solvent with hydroxyl functionality and having a boiling point higher than that of the organic solvent comprised in (ii) or (iii), preferably in (iii), is added to the extractive distillation column at a point above the point at which the mixture obtained in (ii) or (iii), preferably in (iii), enters the column. An overhead product enriched in propylene oxide is distilled of the at the head of the column and a mixture comprising water, the organic solvent, at least one oxygenate as defined above preferably including anthraquinone and/or an anthraquinone derivative and preferably including propylene glycol and further the polar solvent with hydroxyl functionality is extracted as bottom product. The preferred polar solvent with hydroxyl functionality is water. The separation of propylene oxide is carried out under the general conditions in respect of pressure, temperature and residence time with which a person skilled in the art is familiar.

In step (v), the organic solvent, preferably methanol or acetonitrile, more preferably methanol, is separated from the mixture obtained in (iv), obtaining a mixture being depleted of the organic solvent and comprising water, at least one oxygenate as defined above preferably including anthraquinone and/or an anthraquinone derivative and preferably including propylene glycol. Preferably, the organic solvent is separated by submitting the mixture obtained in (iv) to fractional distillation, thereby obtaining an overhead product enriched in organic solvent and a bottom product depleted of organic solvent and comprising water, at least one oxygenate as defined above preferably including anthraquinone and/or an anthraquinone derivative and preferably including propylene glycol. The separation of the organic solvent is carried out under the general conditions in respect of pressure, temperature and residence time with which a person skilled in the art is familiar.

In step (vi), the mixture obtained in (v) may be further submitted to a propylene glycol removal stage. The propylene glycol removal stage in (vi) preferably comprises at least two evaporation and/or distillation stages. Thus, the propylene glycol removal stage in (iv) preferably comprises
(I) evaporating the mixture obtained in (v) in at least two evaporation and/or distillation stages at decreasing operating pressures of the evaporators and/or distillation columns obtaining a mixture (M') and a mixture (M");
(II) separating the mixture (M') obtained in (I) in at least one further distillation step, obtaining a mixture (M-I) being enriched in water, preferably comprising at least 70 weight-% of water, and a mixture (M-II) being depleted of water, preferably comprising at most 30 weight-% of water;
(III) separating propylene glycol from the mixture (M-II) in at least one further distillation step obtaining a mixture being depleted of propylene glycol and comprising water and preferably anthraquinone and/or an anthraquinone derivative.
The distillation performed in steps (I) to (III) is preferably a fractional distillation.

Thus, the mixture obtained from (v) or the mixture obtained from (vi)(III), preferably the mixture obtained from (vi)(III), is the aqueous mixture M1.

Preferably, the wastewater purified according to the process of the present invention is obtained according to the process for the preparation of an olefin oxide comprising the steps (i) to (v), preferably according to the process for the preparation of an olefin oxide comprising the steps (i) to (vi).

The wastewater purified according to the process of the present invention may be suitably reused, for example in an industrial process, or may be released safely into the environment. The present invention is further illustrated by the following figures and examples.

### Brief description of the Figures

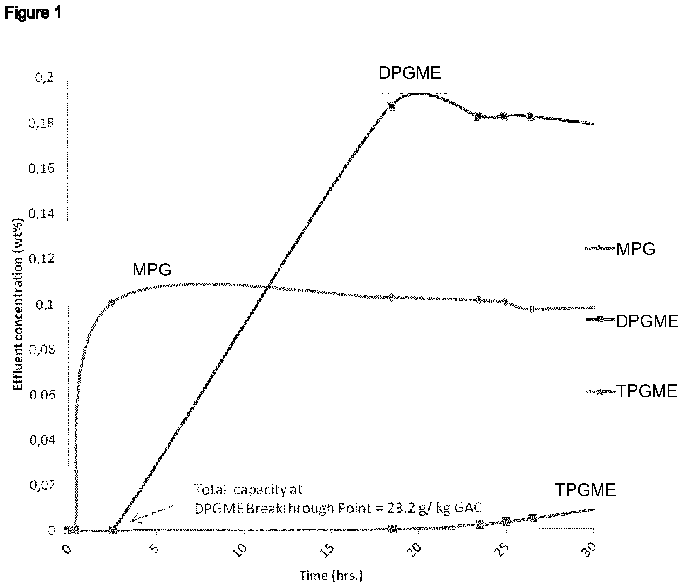

- Figure 1: shows the concentrations of MPG (diamonds), DPGME (bordered squares) and TPGME (simple squares) in a mixture M2 in weight-% relative to the total weight of aqueous mixture M2 following contacting a mixture M1 continuously with activated carbon for 30 hours. The x axis shows the time in hours, the y axis shows the effluent concentrations in weight-% (wt.-%).

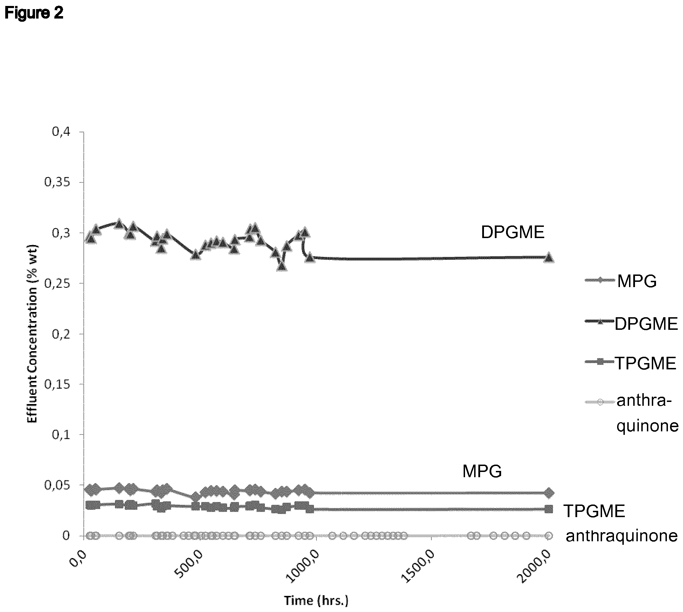

- Figure 2: shows the concentrations of MPG (diamonds), DPGME (bordered triangles), TPGME (squares) and anthraquinone (circles) in a mixture M2 in weight-% relative to the total amount of aqueous mixture M2 following contacting a mixture M1 continuously with activated carbon for 2000 hours. The x axis shows the time in hours, the y axis shows the effluent concentrations in weight-% (wt.-%).

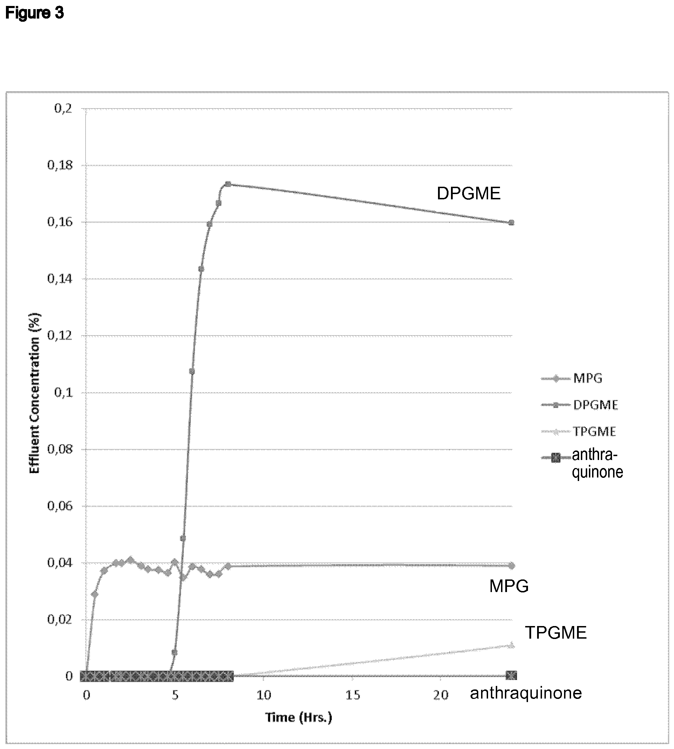

- Figure 3: shows the concentrations of MPG (diamonds), DPGME (squares), TPGME (triangles) and anthraquinone (squared asterisks) in a mixture M2 in weight-% relative to the total amount of aqueous mixture M2 following contacting a mixture M1 continuously with a polystyrenic resin for 24 hours. The x axis shows the time in hours, the y axis shows the effluent concentrations in weight-% (wt.-%).

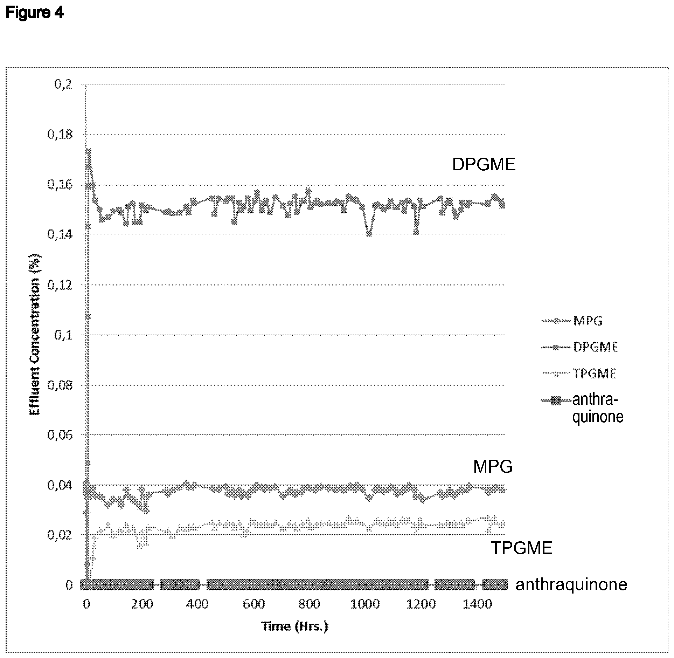

- Figure 4: shows the concentrations of MPG (diamonds), DPGME (squares), TPGME (triangles) and anthraquinone (squared asterisks) in a mixture M2 in weight-% relative to the total amount of aqueous mixture M2 following contacting a mixture M1 with a polystyrenic resin for 1500 hours. The x axis shows the time in hours, the y axis shows the effluent concentrations in weight-% (wt.-%).

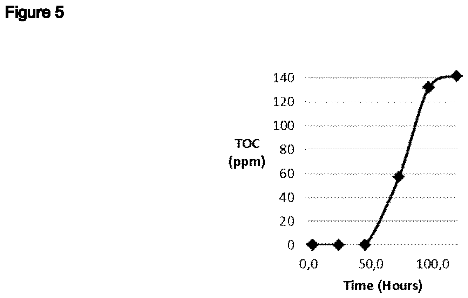

- Figure 5: shows the TOC of a mixture M2 in weight-ppm as a function of the runtime of a wastewater treatment as described in Example 3. The x axis shows the time in hours, with tickmarks at 0.0, 50.0, and 100.0 h), the y axis shows the TOC of the effluentein weight-ppm.

### Examples

### Example 1: Reduction of TOC in wastewater using activated carbon

Wastewater containing MPG, DPGME, TPGME and anthraquinone in the amounts indicated below in Table 1 representing a mixture M1 was obtained from a large scale propylene oxide production plant, following the downstream processing of a reaction mixture obtained by oxidizing propene with hydrogen peroxide to propylene oxide using a heterogeneous zeolitic catalyst comprising titanium silicalite-1.

**Table 1**

| **Component** | **Amount in mixture M1** |
|---|---|
| MPG | 0.05 weight-% |
| DPGME | 0.30 weight-% |
| TPGME | 0.03 weight-% |
| Anthraquinone | 48 weight-ppb |
| TOC | 0.2 weight-% |
| Water | 99.42 weight-% |

The amounts of the oxygenates MPG, DPGME and TPGME and the TOC were determined for mixture M1 and further for mixture M2 relative to the total amounts of the respective mixtures. Mixture M2 was obtained following contacting mixture M1 continuously with activated carbon. MPG, DPGME and TPGME concentrations were determined by gas chromatography using an internal standard. The anthraquinone amount was determined by high pressure liquid chromatography (HPLC). The TOC was determined according to DIN EN 1484 by thermal catalytic oxidation with subsequent NDIR (nondispersive infrared) detection using a DIMATOC 2000 analyzer (DIMATEC Analysentechnik GmbH, Essen).

A chromatography column of stainless steel with a length of 62 cm and an inner diameter of 16 mm was packed with 53.4 g granulated activated charcoal (GAC, Cyclocarb 401, Chemviron Carbon GmbH). The GAC was held in place by a 1 cm long portion of glass wool placed at the top and bottom of the tube, respectively.

The mixture M1 was passed at ambient temperature over the GAC with a bed volume (BV) of 4.6 h⁻¹. Accordingly, the contact time was 13 min. The contacting was performed and monitored for 2000 hours in total.

Figure 1 shows the MPG (diamonds), DPGME (bordered squares) and TPGME (simple squares) concentrations in the mixture M2 obtained following a continuous contacting of mixture M1 with the activated carbon for the first 30 hours. MPG was not retained by the GAC, whereas DPMGE was retained for about 2.5 hours and a beginning of a break-through for TPMGE was observed after about 25 hours. Thus, the TOC was considerably reduced in the first hours of contacting mixture M1 with the activated carbon. The total capacity of the activated carbon at the break through point of DPGME was 23.2 g/kg GAC.

Following the first 30 hours, the contacting of the mixture M1 with the activated carbon was further continued. Figure 2 shows the concentrations of the individual oxygenates in the mixture M2 following a continuous contacting for 2000 hours in total. No break-through for anthraquinone (indicated by circles) was observed within this time period. The TOC of mixture M2 observed after 2000 hours (i.e. with the exception of anthraquinone for which no break-through was observed) was 0.2 weight-% relative to the total weight of mixture M2.

### Example 2: Reduction of TOC in wastewater using an organic polymer

Wastewater containing MPG, DPGME, TPGME and anthraquinone in the amounts indicated below in Table 2 representing a mixture M1 was obtained from a large scale propylene oxide production plant, following the downstream processing of a reaction mixture obtained by oxidizing propene with hydrogen peroxide to propylene oxide using a heterogeneous zeolitic catalyst comprising titanium silicalite-1.

**Table 2**

| **Component** | **Amount in mixture M1** |
|---|---|
| MPG | 0.04 weight-% |
| DPGME | 0.15 weight-% |
| TPGME | 0.02 weight-% |
| Anthraquinone | 52 weight-ppb |
| TOC | 0.13 weight-% |
| Water | 99.66 weight-% |

The concentrations of the oxygenates MPG, DPGME TPGME and anthraquinone and the TOC were determined for mixture M1 and further for mixture M2 obtained following a continuous contacting of mixture M1 with the organic polymer as described in Example 1.

A chromatography column as described in Example 1 having a bed volume of 110.6 ml was packed with 30 g of a polystyrenic resin (Optipore L-483, Dowex). The resin was held in place by a 1 cm long portion of glass wool placed at the top and bottom of the tube, respectively. The mixture M1 was passed at ambient temperature over the resin with a bed volume of 4.6 h⁻¹, so that the contact time was 13 min. The contacting was performed and monitored for 1500 hours in total. Figure 3 shows the MPG (diamonds), DPGME (squares), TPGME (triangles) and anthraquinone (squared asterisks) concentrations in the mixture M2 obtained following a continuous contacting of mixture M1 with the polystyrenic resin for the first 24 hours. MPG was not retained by the resin. A break-through for DPMGE and TPMGE was observed after about 5 and 8 hours, respectively. The TOC could be considerably reduced in the first hours of contacting mixture M1 with the polystyrenic resin.

The contacting was further continued. Figure 4 further shows the concentrations of the individual oxygenates in the mixture M2 following the contacting of mixture M1 with the polystyrenic resin over a time period of 1500 hours. No break-through for anthraquinone (indicated by squared asterisks) was observed within this time period. The TOC after 1500 h hours in mixture M2 (i.e. with the exception of anthraquinone for which no break-through was observed) was 0.13 weight-%, relative to the total weight of the mixture M2.

### Example 3: Adsorbing agent replacing a spent reverse osmosis unit (not covered by the present invention)

A wastewater stream was obtained from a large scale propylene oxide production plant, following the downstream processing of a reaction mixture obtained by oxidizing propene with hydrogen peroxide to propylene oxide using a heterogeneous zeolitic catalyst comprising titanium silicalite-1. The wastewater stream had a similar composition as the wastewater according to Examples 1 and 2. The TOC of the wastewater was in the range of from 0.15 to 0.25 weight-%.

According to a first experimental setup, this wastewater stream was treated using a reverse osmosis membrane, and a treated wastewater stream was obtained as permeate having a TOC of 0.005 to 0.015 weight-%. During the reverse osmosis membrane treatment, the feed flowrate of the wastewater stream to be passed through the reverse osmosis membrane was 50 m³/h at a temperature of the feed stream of 30 to 35 °C and a pressure of the feed stream of 4 bar. As reverse osmosis membrane, Filmtech® BW30-XFR (DOW) was employed at a pressure of 35 bar and a temperature of 30 to 35 °C. The flowrate of the permeate having a TOC of 0.01 weight-% was 47 m³/h, at a pressure of 1 bar and a temperature of 30 to 35 °C.

In a second experimental setup, the wastewater stream obtained from the large scale propylene oxide production plant and having a TOC of 0.2 weight-% was contacted with an adsorbing agent according to the present invention. As adsorbent, a carbon bed was used consisting of Carbsorb 40 (Calgon; granular activated carbon). The bed consisted of 68 g of Carbsorb 40, and the wastewaterstream was passed through the bed with a flow rate of 0.3 ml/min. The column diameter in which the bed was arranged was 1.6 cm, the column length was 62 cm. The length of the bed in the column was 55 cm, and the bed volume was 110.6 ml. The wastewater stream was passed at ambient temperature over the GAC with a bed volume of 0.16 h⁻¹. After 50 hours, the TOC of the treated wastewater stream leaving the bed was 0.001 weight-%; after 70 hours, the respective TOC was 0.005 weight-ppm, and 0.015 weight-% after 120 hours. In Figure 5, the TOC of the treated wasterwater stream is shown as a function of the runtime of the treatment using the activated carbon bed.

The comparison of the two experimental setups shows that for a certain period of time (up to 120 hours), the treatment of the wastewater with an adsorbent according to the invention leads to the same results as a treatment with a revers osmosis membrane - in both cases, the TOC of the obtained wastewater was at most 0.015 weight-%. Therefore, in particular in a large-scale industrial plant, the contacting of a wastewater stream with an adsorbing agent arranged upstream of a reverse osmosis treatment can be carried out as a bridging measure when a spent reverse osmosis unit is to be replaced with a fresh reverse osmosis unit.

### Cited Literature

- WO-A 2004/000773
- US-A 5,599,955
- US-A 2002/010378
- US-A 6,288,287
- US-A 5,269,933
- EP-A 0 532 905
- EP-A 0 324 915
- US-A 6,712,882
- Ullmann's Encyclopedia of Industrial Chemistry, 5th edition, volume A 13 (1989) pages 443-466

## Claims

1. A process for reducing the total organic carbon (TOC) in an aqueous mixture M1 obtained as wastewater from a process for the preparation of an olefin oxide, the process for reducing the TOC comprising:
(a) contacting the mixture M1 which contains at least one oxygenate having from 1 to 16 carbon atoms with an adsorbing agent and adsorbing at least a portion of an oxygenate at the adsorbing agent;
(b) separating an aqueous mixture M2 from the adsorbing agent, the mixture M2 being depleted of the oxygenate adsorbed in (a);
(c) separating an oxygenate from the mixture M2 obtained in (b) by subjecting the mixture M2 to reverse osmosis in at least one reverse osmosis unit containing a reverse osmosis membrane obtaining an aqueous mixture M3 being depleted of this oxygenate,
wherein the at least one oxygenate contained in the mixture M1 is selected from the group consisting of alcohols, ethers, aldehydes, ketones, and combinations of two or more thereof; wherein an oxygenate adsorbed in (a) is anthraquinone and/or an anthraquinone derivative; wherein the anthraquinone derivative is selected from the group consisting of C2-C5 alkyl anthraquinones and combinations of two or more thereof; and wherein the anthraquinone and/or anthraquinone derivative is contained in mixture M1 in an amount in the range of from 1 to 100 weight-ppb relative the total weight of the mixture M1, wherein at least 80 % of the anthraquinone and/or the anthraquinone derivative contained in the mixture M1 are adsorbed in (a).

2. The process of claim 1, wherein the aqueous mixture M1 contains water in an amount of at least 95 weight-%, preferably at least 98 weight-%, more preferably at least 99 weight-%, more preferably at least 99.4 weight-% relative to the total weight of the aqueous mixture M1, and the at least one oxygenate in an amount of at most 1 weight-%, preferably at most 0.5 weight-%, more preferably at most 0.3 weight-%, more preferably at most 0.2 weight-%, relative to the total weight of the aqueous mixture M1.

3. The process of claim 1 or 2, wherein the adsorbing agent according to (a) is selected from the group consisting of activated carbon, an organic polymer, a silica gel, a molecular sieve, and combinations of two or more thereof, wherein the organic polymer is preferably a polystyrene-based polymer.

4. The process of any of claims 1 to 3, wherein the adsorbing agent according to (a) has a total pore volume in the range of from 0.1 to 3 cm³/g, preferably from 0.2 to 2.5 cm³/g, more preferably from 0.5 to 1.5 cm³/g, determined according to DIN 66133; and/or wherein the adsorbing agent according to (a) has a mean pore size in the range of from 5 to 900 Angstrom, preferably from 10 to 600 Angstrom, more preferably from 12 to 300 Angstrom, more preferably from 15 to 100 Angstrom, more preferably from 17 to 70 Angstrom, determined according to DIN 66133; and/or
wherein the adsorbing agent according to (a) has a BET surface area in the range of from 500 to 1500 m²/g, preferably from 800 to 1450 m²/g, more preferably from 900 to 1400 m²/g, determined according to DIN 66131.

5. The process of any of claims 1 to 4, wherein the contacting in (a) is performed in continuous mode, wherein the mixture M1 is passed over the adsorbing agent provided in a suitable container, preferably with a bed volume in the range of from 0.1 to 7 h⁻¹, more preferably from 0.3 to 6 h⁻¹, more preferably from 0.5 to 5 h⁻¹, wherein the bed volume is defined as the ratio of the flow rate of the mixture M1 in liter/h relative to the volume of the adsorbing agent in liter, and preferably wherein the contacting in (a) is performed at a pressure in the range of from 0.7 to 20 bar, preferably from 0.8 to 15 bar, more preferably from 0.9 to 10 bar, more preferably from 1 to 5 bar, and at a temperature in the range of from 5 to 80 °C, preferably from 10 to 60 °C, more preferably from 15 to 45 °C.

6. The process of any of claims 1 to 5, wherein at least 90 %, preferably at least 95 %, more preferably at least 99 % of the anthraquinone and/or the anthraquinone derivatives contained in the mixture M1 are adsorbed in (a).

7. The process of any of claims 1 to 6, wherein the reverse osmosis membrane according to (c) is selected from the group consisting of a tubular membrane, a capillary membrane, a spiral membrane, a hollow fiber membrane, and a combination of two or more thereof.

8. The process of any of claims 1 to 7, wherein the subjecting in (c) is performed at a pressure in the range of from 2 to 100 bar, preferably from 5 to 80 bar, more preferably from 10 to 60 bar, more preferably from 20 to 50 bar and at a temperature in the range of from 5 to 80 °C, preferably from 10 to 60 °C, more preferably from 15 to 50 °C, and preferably wherein the reverse osmosis in (c) is performed in continuous mode, preferably at a permeate flow in the range of from 1 to 20 kg·m⁻²·h⁻¹, more preferably from 2 to 15 kg·m⁻²·h⁻¹, more preferably from 5 to 10 kg·m⁻²·h⁻¹.

9. The process of any of claims 1 to 8, wherein the TOC of the mixture M3 obtained in (c) is at most 0.1 %, preferably at most 0.08 %, more preferably at most 0.05 %, more preferably at most 0.01 % of the TOC of the mixture M1.

10. The process of any of claims 1 to 9, further comprising
(d) subjecting the mixture M3 obtained in (c) to a biological wastewater treatment, obtaining a mixture M4, wherein the biological wastewater treatment in (d) preferably comprises contacting the mixture M3 with aerobic and/or anaerobic microorganisms.

11. The process of any of claims 1 to 10, wherein the aqueous mixture M1 is obtained as wastewater from a process for the preparation of an olefin oxide wherein the olefin oxide is obtained from the respective olefin, by epoxidation with hydrogen peroxide which is preferably prepared according to an anthraquinone process, preferably wherein the olefin oxide is propylene oxide and the olefin is propene.

12. The process of any of claims 1 to 11, wherein the process for the preparation of an olefin oxide is a process for the preparation of propylene oxide and comprises
(i) providing a mixture comprising an organic solvent, preferably methanol or acetonitrile, more preferably methanol, propene, optionally propane, an epoxidation agent, preferably hydrogen peroxide, more preferably hydrogen peroxide prepared according to an anthraquinone process;
(ii) subjecting the mixture provided in (i) to epoxidation conditions in the presence of a catalyst, the catalyst preferably comprising a titanium zeolite, more preferably comprising a titanium silicalite-1 or a titanium zeolite having MWW framework structure, more preferably comprising a titanium silicalite-1, obtaining a mixture comprising the organic solvent, propylene oxide, water, at least one oxygenate as defined in claim 1 and including anthraquinone and/or an anthraquinone derivative, optionally propene, and optionally propane;
(iii) optionally separating propene and propane from the mixture obtained from (ii) obtaining a mixture being depleted of propene and optionally propane, and comprising water, propylene oxide, the organic solvent, at least one oxygenate as defined in claim 1 and including anthraquinone and/or an anthraquinone derivative and preferably including propylene glycol;
(iv) separating propylene oxide from the mixture obtained in (ii) or (iii), preferably from the mixture obtained in (iii), obtaining a mixture being depleted of propylene oxide and comprising water, the organic solvent, at least one oxygenate as defined in claim 1 and including anthraquinone and/or an anthraquinone derivative and preferably including propylene glycol;
(v) separating the organic solvent from the mixture obtained in (iv), obtaining a mixture being depleted of the organic solvent and comprising water, at least one oxygenate as defined in claim 1 and including anthraquinone and/or an anthraquinone derivative and preferably including propylene glycol;
(vi) preferably subjecting the mixture obtained in (v) to a propylene glycol removal stage, preferably comprising
(I) evaporating the mixture in at least two evaporation and/or distillation stages at decreasing operating pressures of the evaporators and/or distillation columns obtaining a mixture (M') and a mixture (M");
(II) separating the mixture (M') obtained in (I) in at least one further distillation step, obtaining a mixture (M-I) being enriched in water, preferably comprising at least 70 weight-% of water, and a mixture (M-II) being depleted of water, preferably comprising at most 30 weight-% of water;
(III) separating propylene glycol from the mixture (M-II) in at least one further distillation step obtaining a mixture being depleted of propylene glycol and comprising water and least one oxygenate as defined in claim 1 and including anthraquinone and/or an anthraquinone derivative;
wherein the mixture obtained from (v) or the mixture obtained from (vi)(III), preferably the mixture obtained from (vi)(III), is the aqueous mixture M1.

## Patentansprüche

1. Verfahren zum Reduzieren des gesamten organischen Kohlenstoffs (Total Organic Carbon, TOC) in einer als Abwasser aus einem Verfahren zur Herstellung eines Oelfinoxids erhaltenen wässrigen Mischung M1, wobei das Verfahren zum Reduzieren des TOC Folgendes umfasst:
(a) das Inkontaktbringen der mindestens ein Oxygenat mit 1 bis 16 Kohlenstoffatomen enthaltenden Mischung M1 mit einem Adsorbtionsmittel und das Adsorbieren mindestens eines Teils eines Oxygenats am Adsorptionsmittel,
(b) das Abtrennen einer wässrigen Mischung M2 vom Adsorptionsmittel, wobei die Mischung M2 am in (a) adsorbierten Oxygenat abgereichert ist,
(c) das Abtrennen eines Oxygenats von der in (b) erhaltenen Mischung M2, indem man die Mischung M2 einer reversen Osmose in wenigstens einer eine Reverse-Osmose-Membran enthaltenden Reverse-Osmose-Einheit unterzieht, unter Erhalt einer wässrigen Mischung M3, die an diesem Oxygenat abgereichert ist,
wobei das in der Mischung M1 enthaltene mindestens eine Oxygenat aus der aus Alkoholen, Ethern, Aldehyden, Ketonen und Kombinationen von zwei oder mehr davon bestehenden Gruppe ausgewählt ist, wobei es sich bei einem in (a) adsorbierten Oxygenat um Anthrachinon und/oder ein Anthrachinonderivat handelt, wobei das Anthrachinonderivat aus der aus C2-C5-Alkylanthrachinonen und Kombinationen von zwei oder mehr davon bestehenden Gruppe ausgewählt ist und wobei das Anthrachinon und/oder Anthrachinonderivat in der Mischung M1 in einer Menge im Bereich von 1 bis 100 Gewichts-ppb, bezogen auf das Gesamtgewicht der Mischung M1, enthalten ist, wobei mindestens 80% des in der Mischung M1 enthaltenen Anthrachinons und/oder Anthrachinonderivats in (a) adsorbiert werden.

2. Verfahren nach Anspruch 1, wobei die wässrige Mischung M1 Wasser in einer Menge von mindestens 95 Gew.-%, vorzugsweise mindestens 98 Gew.-%, besonders bevorzugt mindestens 99 Gew.-%, weiter bevorzugt mindestens 99,4 Gew.-%, bezogen auf das Gesamtgewicht der wässrigen Mischung M1, und das mindestens eine Oxygenat in einer Menge von höchstens 1 Gew.-%, vorzugsweise höchstens 0,5 Gew.-%, besonders bevorzugt höchstens 0,3 Gew.-%, weiter bevorzugt höchstens 0,2 Gew.-%, bezogen auf das Gesamtgewicht der wässrigen Mischung M1, enthält.

3. Verfahren nach Anspruch 1 oder 2, wobei das Adsorptionsmittel gemäß (a) aus der aus Aktivkohle, einem organischen Polymer, einem Kieselgel, einem Molekularsieb und Kombinationen von zwei oder mehr davon bestehenden Gruppe ausgewählt ist, wobei es sich bei dem organischen Polymer vorzugsweise um ein Polymer auf Polystyrolbasis handelt.

4. Verfahren nach einem der Ansprüche 1 bis 3, wobei das Adsorptionsmittel gemäß (a) ein Gesamtporenvolumen im Bereich von 0,1 bis 3 cm³/g, vorzugsweise von 0,2 bis 2,5 cm³/g, besonders bevorzugt von 0,5 bis 1,5 cm³/g, bestimmt gemäß DIN 66133, aufweist und/oder wobei das Adsorptionsmittel gemäß (a) eine mittlere Porengröße im Bereich von 5 bis 900 Ängström, vorzugsweise von 10 bis 600 Ängström, besonders bevorzugt von 12 bis 300 Ängström, weiter bevorzugt von 15 bis 100 Ängström, weiter bevorzugt von 17 bis 70 Ängström, bestimmt gemäß DIN 66133, aufweist und/oder
wobei das Adsorptionsmittel gemäß (a) eine BET-Oberfläche im Bereich von 500 bis 1500 m²/g, vorzugsweise von 800 bis 1450 m²/g, besonders bevorzugt von 900 bis 1400 m²/g, bestimmt gemäß DIN 66131, aufweist.

5. Verfahren nach einem der Ansprüche 1 bis 4, wobei das Inkontaktbringen in (a) kontinuierlich erfolgt, wobei die Mischung M1 über das in einem geeigneten Behältnis bereitgestellte Adsorptionsmittel geführt wird, vorzugsweise mit einem Bettvolumen im Bereich von 0,1 bis 7 h⁻¹, besonders bevorzugt von 0,3 bis 6 h⁻¹, weiter bevorzugt von 0,5 bis 5 h⁻¹, wobei das Bettvolumen als das Verhältnis der Durchflussgeschwindigkeit der Mischung M1 in Liter/h zum Volumen des Adsorptionsmittels in Litern definiert ist, und wobei das Inkontaktbringen in (a) vorzugsweise bei einem Druck im Bereich von 0,7 bis 20 bar, bevorzugt von 0,8 bis 15 bar, weiter bevorzugt von 0,9 bis 10 bar, weiter bevorzugt von 1 bis 5 bar, und bei einer Temperatur im Bereich von 5 bis 80°C, vorzugsweise von 10 bis 60°C, besonders bevorzugt von 15 bis 45°C, erfolgt.

6. Verfahren nach einem der Ansprüche 1 bis 5, wobei mindestens 90%, vorzugsweise mindestens 95%, besonders bevorzugt mindestens 99% des/der in der Mischung M1 enthaltenen Anthrachinons und/oder Anthrachinonderivate in (a) adsorbiert werden.

7. Verfahren nach einem der Ansprüche 1 bis 6, wobei die Reverse-Osmose-Membran gemäß (c) aus der aus einer röhrenförmigen Membrane, einer kapillarförmigen Membrane, einer spiralförmigen Membrane, einer Hohlfasermembrane und einer Kombination von zwei oder mehr davon bestehenden Gruppe ausgewählt ist.

8. Verfahren nach einem der Ansprüche 1 bis 7, wobei das Unterziehen in (c) bei einem Druck im Bereich von 2 bis 100 bar, vorzugsweise von 5 bis 80 bar, besonders bevorzugt von 10 bis 60 bar, weiter bevorzugt von 20 bis 50 bar, und bei einer Temperatur im Bereich von 5 bis 80°C, vorzugsweise von 10 bis 60°C, besonders bevorzugt von 15 bis 50°C, erfolgt und wobei die reverse Osmose in (c) vorzugsweise kontinuierlich, vorzugsweise bei einem Permeatstrom im Bereich von 1 bis 20 kg·m⁻²·h⁻¹, besonders bevorzugt von 2 bis 15 kg·m⁻²·h⁻¹, weiter bevorzugt von 5 bis 10 kg·m⁻²·h⁻¹ erfolgt.

9. Verfahren nach einem der Ansprüche 1 bis 8, wobei der TOC der in (c) erhaltenen Mischung M3 höchstens 0,1%, vorzugsweise höchstens 0,08%, besonders bevorzugt höchstens 0,05%, weiter bevorzugt höchstens 0,01% des TOC der Mischung M1 beträgt.

10. Verfahren nach einem der Ansprüche 1 bis 9, welches weiterhin Folgendes umfasst:
(d) das Unterziehen der in (c) erhaltenen Mischung M3 einer biologischen Abwasserbehandlung, unter Erhalt einer Mischung M4, wobei die biologische Abwasserbehandlung in (d) vorzugsweise das Inkontaktbringen der Mischung M3 mit aeroben und/oder anaeroben Mikroorganismen umfasst.

11. Verfahren nach einem der Ansprüche 1 bis 10, wobei man die wässrige Mischung M1 als Abwasser aus einem Verfahren zur Herstellung eines Olefinoxids erhält, wobei man das Olefinoxid aus dem entsprechenden Olefin durch Epoxidierung mit Wasserstoffperoxid, das vorzugsweise gemäß einem Anthrachinonverfahren hergestellt wird, erhält, wobei es sich bei dem Olefinoxid vorzugsweise um Propylenoxid und bei dem Olefin vorzugsweise um Propen handelt.

12. Verfahren nach einem der Ansprüche 1 bis 11, wobei es sich bei dem Verfahren zur Herstellung eines Olefinoxids um ein Verfahren zur Herstellung von Propylenoxid handelt und das Verfahren Folgendes umfasst:
(i) das Bereitstellen einer ein organisches Lösungsmittel, vorzugsweise Methanol oder Acetonitril, besonders bevorzugt Methanol, Propen, gegebenenfalls Propan, ein Epoxidierungsmittel, vorzugsweise Wasserstoffperoxid, besonders bevorzugt gemäß einem Anthrachinonverfahren hergestelltes Wasserstoffperoxid, umfassenden Mischung,
(ii) das Aussetzen der in (i) bereitgestellten Mischung gegenüber Epoxidierungsbedingungen in Gegenwart eines Katalysators, wobei der Katalysator vorzugsweise ein Titanzeolit, besonders bevorzugt Titansilicalit-1 oder ein Titanzeolit mit einer MWW-Rahmenstruktur, weiter bevorzugt ein Titansilicalit-1, umfasst, unter Erhalt einer das organische Lösungsmittel, Propylenoxid, Wasser, mindestens ein wie in Anspruch 1 definiertes Oxygenat und einschließlich Anthrachinon und/oder eines Anthrachinonderivats, gegebenenfalls Propen und gegebenenfalls Propan umfassenden Mischung,
(iii) gegebenenfalls das Abtrennen von Propen und Propan aus der aus (ii) erhaltenen Mischung unter Erhalt einer an Propen und gegebenenfalls Propan abgereicherten Mischung, umfassend Wasser, Propylenoxid, das organische Lösungsmittel, mindestens ein wie in Anspruch 1 definiertes Oxygenat und einschließlich Anthrachinon und/oder eines Anthrachinonderivats und vorzugsweise einschließlich Propylenglykol,
(iv) das Abtrennen des Propylenoxids aus der in (ii) oder (iii) erhaltenen Mischung, vorzugsweise aus der in (iii) erhaltenen Mischung, unter Erhalt einer an Propylenoxid abgereicherten Mischung, umfassend Wasser, das organische Lösungsmittel, mindestens ein wie in Anspruch 1 definiertes Oxygenat und einschließlich Anthrachinon und/oder eines Anthrachinonderivats und vorzugsweise einschließlich Propylenglykol,
(v) das Abtrennen des organischen Lösungsmittels aus der in (iv) erhaltenen Mischung, unter Erhalt einer an dem organischen Lösungsmittel abgereicherten Mischung, umfassend Wasser, mindestens ein wie in Anspruch 1 definiertes Oxygenat und einschließlich Anthrachinon und/oder eines Anthrachinonderivats und vorzugsweise einschließlich Propylenglykol,
(vi) vorzugsweise das Behandeln der in (v) erhaltenen Mischung in einer Propylenglykolentfernungsstufe, vorzugsweise umfassend
(I) das Eindampfen der Mischung in mindestens zwei Eindampfungs- und/oder Destillationsstufen bei abnehmenden Betriebsdrücken der Verdampfer und/oder Destillationssäulen unter Erhalt einer Mischung (M') und einer Mischung (M"),
(II) das Auftrennen der in (I) erhaltenen Mischung (M') in mindestens einem weiteren Destillationsschritt, unter Erhalt einer an Wasser angereicherten Mischung (M-I), die vorzugsweise mindestens 70 Gew.-% Wasser umfasst, und einer an Wasser abgereicherten Mischung (M-II), die vorzugsweise höchstens 30 Gew.-% Wasser umfasst,
(III) das Abtrennen von Propylenglykol aus der Mischung (M-II) in mindestens einem weiteren Destillationsschritt unter Erhalt einer an Propylenglykol abgereicherten Mischung, umfassend Wasser und mindestens ein wie in Anspruch 1 definiertes Oxygenat und einschließlich Anthrachinon und/oder eines Anthrachinonderivats,
wobei die aus (v) erhaltene Mischung oder die aus (vi)(III) erhaltene Mischung, vorzugsweise die aus (vi)(III) erhaltene Mischung, die wässrige Mischung M1 ist.

## Revendications

1. Procédé pour la réduction du carbone organique total (COT) dans un mélange aqueux M1 obtenu en tant qu'eau résiduaire à partir d'un procédé pour la préparation d'un oxyde d'oléfine, le procédé pour la réduction du COT comprenant :
(a) la mise en contact du mélange M1 qui contient au moins un composé oxygéné ayant de 1 à 16 atomes de carbone avec un agent adsorbant et l'adsorption d'au moins une partie d'un composé oxygéné sur l'agent adsorbant ;
(b) la séparation d'un mélange aqueux M2 d'avec l'agent adsorbant, le mélange M2 étant appauvri en le composé oxygéné adsorbé en (a) ;
(c) la séparation d'un composé oxygéné à partir du mélange M2 obtenu en (b) par le fait de soumettre le mélange M2 à une osmose inverse dans au moins une unité d'osmose inverse contenant une membrane d'osmose inverse ce qui permet d'obtenir un mélange aqueux M3 qui est appauvri en ce composé oxygéné,
dans lequel l'au moins un composé oxygéné contenu dans le mélange M1 est choisi dans le groupe constitué par les alcools, les éthers, les aldéhydes, les cétones et les associations de deux ou plus de deux de ceux-ci ; un composé oxygéné adsorbé en (a) étant l'anthraquinone et/ou un dérivé d'anthraquinone ; le dérivé d'anthraquinone étant choisi dans le groupe constitué par les (alkyl en C2-C5)anthraquinones et les associations de deux ou plus de deux de celles-ci ; et l'anthraquinone et/ou le dérivé d'anthraquinone étant contenus dans le mélange M1 en une quantité dans la plage de 1 à 100 ppb en poids par rapport au poids total du mélange M1, au moins 80 % de l'anthraquinone et/ou du dérivé d'anthraquinone contenus dans le mélange M1 étant adsorbés en (a).

2. Procédé selon la revendication 1, dans lequel le mélange aqueux M1 contient de l'eau en une quantité d'au moins 95 % en poids, de préférence d'au moins 98 % en poids, de préférence encore d'au moins 99 % en poids, de préférence encore d'au moins 99,4 % en poids par rapport au poids total du mélange aqueux M1 et l'au moins un composé oxygéné en une quantité d'au maximum 1 % en poids, de préférence d'au maximum 0,5 % en poids, de préférence encore d'au maximum 0,3 % en poids, de préférence encore d'au maximum 0,2 % en poids, par rapport au poids total du mélange aqueux M1.

3. Procédé selon la revendication 1 ou 2, dans lequel l'agent adsorbant selon (a) est choisi dans le groupe constitué par le charbon actif, un polymère organique, un gel de silice, un tamis moléculaire et les associations de deux ou plus de deux de ceux-ci, le polymère organique étant de préférence un polymère à base de polystyrène.

4. Procédé selon l'une quelconque des revendications 1 à 3, dans lequel l'agent adsorbant selon (a) a un volume total des pores, déterminé selon la méthode DIN 66133, dans la plage de 0,1 à 3 cm³/g, de préférence de 0,2 à 2,5 cm³/g, de préférence encore de 0,5 à 1,5 cm³/g ; et/ou
dans lequel l'agent adsorbant selon (a) a une taille moyenne des pores, déterminée selon la méthode DIN 66133, dans la plage de 5 à 900 angströms, de préférence de 10 à 600 angströms, de préférence encore de 12 à 300 angströms, de préférence encore de 15 à 100 angströms, de préférence encore de 17 à 70 angströms ; et/ou
dans lequel l'agent adsorbant selon (a) a une surface spécifique BET, déterminée selon la méthode DIN 66131, dans la plage de 500 à 1500 m²/g, de préférence de 800 à 1450 m²/g, de préférence encore de 900 à 1400 m²/g.

5. Procédé selon l'une quelconque des revendications 1 à 4, dans lequel la mise en contact en (a) est effectuée en mode continu, dans lequel le mélange M1 est amené à passer sur l'agent adsorbant disposé dans un récipient approprié, de préférence avec un volume de lit dans la plage de 0,1 à 7 h⁻¹, de préférence encore de 0,3 à 6 h⁻¹, de préférence encore de 0,5 à 5 h⁻¹, le volume de lit étant défini comme le rapport du débit du mélange M1 en litres/h sur le volume de l'agent adsorbant en litres, et de préférence dans lequel la mise en contact en (a) est effectuée à une pression dans la plage de 0,7 à 20 bar, de préférence de 0,8 à 15 bar, de préférence encore de 0,9 à 10 bar, de préférence encore de 1 à 5 bar, et à une température dans la plage de 5 à 80 °C, de préférence de 10 à 60 °C, de préférence encore de 15 à 45 °C.

6. Procédé selon l'une quelconque des revendications 1 à 5, dans lequel au moins 90 %, de préférence au moins 95 %, de préférence encore au moins 99 % de l'anthraquinone et/ou des dérivés d'anthraquinone contenus dans le mélange M1 sont adsorbés en (a).

7. Procédé selon l'une quelconque des revendications 1 à 6, dans lequel la membrane d'osmose inverse selon (c) est choisie dans le groupe constitué par une membrane tubulaire, une membrane capillaire, une membrane spiralée, une membrane sous forme de fibres creuses et une association de deux ou plus de deux de celles-ci.

8. Procédé selon l'une quelconque des revendications 1 à 7, dans lequel le fait de soumettre en (c) est effectué à une pression dans la plage de 2 à 100 bar, de préférence de 5 à 80 bar, de préférence encore de 10 à 60 bar, de préférence encore de 20 à 50 bar et à une température dans la plage de 5 à 80 °C, de préférence de 10 à 60 °C, de préférence encore de 15 à 50 °C et de préférence dans lequel l'osmose inverse en (c) est effectuée en mode continu, de préférence à un débit de perméat dans la plage de 1 à 20 kg·m⁻²·h⁻¹, de préférence encore de 2 à 15 kg·m⁻²·h⁻¹, de préférence encore de 5 à 10 kg·m⁻²·h⁻¹.

9. Procédé selon l'une quelconque des revendications 1 à 8, dans lequel le COT du mélange M3 obtenu en (c) est d'au maximum 0,1 %, de préférence d'au maximum 0,08 %, de préférence encore d'au maximum 0,05 %, de préférence encore d'au maximum 0,01 % du COT du mélange M1.

10. Procédé selon l'une quelconque des revendications 1 à 9, comprenant en outre
(d) le fait de soumettre le mélange M3 obtenu en (c) à un traitement biologique d'eau résiduaire, ce qui permet d'obtenir un mélange M4, le traitement biologique d'eau résiduaire en (d) comprenant de préférence la mise en contact du mélange M3 avec des micro-organismes aérobies et/ou des micro-organismes anaérobies.

11. Procédé selon l'une quelconque des revendications 1 à 10, dans lequel le mélange aqueux M1 est obtenu en tant qu'eau résiduaire à partir d'un procédé pour la préparation d'un oxyde d'oléfine, l'oxyde d'oléfine étant obtenu à partir de l'oléfine respective, par époxydation avec du peroxyde d'hydrogène qui est de préférence préparé selon un procédé à l'anthraquinone, de préférence l'oxyde d'oléfine étant l'oxyde de propylène et l'oléfine étant le propène.

12. Procédé selon l'une quelconque des revendications 1 à 11, dans lequel le procédé pour la préparation d'un oxyde d'oléfine est un procédé pour la préparation d'oxyde de propylène et comprend
(i) la fourniture d'un mélange comprenant un solvant organique, de préférence du méthanol ou de l'acétonitrile, de préférence encore du méthanol, du propène, éventuellement du propane, un agent d'époxydation, de préférence du peroxyde d'hydrogène, de préférence encore du peroxyde d'hydrogène préparé selon un procédé à l'anthraquinone ;
(ii) le fait de soumettre le mélange fourni en (i) à des conditions d'époxydation en présence d'un catalyseur, le catalyseur comprenant de préférence une zéolite au titane, de préférence encore comprenant un silicalite-1 au titane ou une zéolite au titane ayant une structure MWW, de préférence encore comprenant un silicalite-1 au titane, ce qui permet d'obtenir un mélange comprenant le solvant organique, de l'oxyde de propylène, de l'eau, au moins un composé oxygéné tel que défini dans la revendication 1 et comprenant de l'anthraquinone et/ou un dérivé d'anthraquinone, éventuellement du propène et éventuellement du propane ;
(iii)éventuellement la séparation de propène et de propane à partir du mélange obtenu à partir de (ii) ce qui permet d'obtenir un mélange qui est appauvri en propène et éventuellement en propane et comprenant de l'eau, de l'oxyde de propylène, le solvant organique, au moins un composé oxygéné tel que défini dans la revendication 1 et comprenant de l'anthraquinone et/ou un dérivé d'anthraquinone et de préférence comprenant du propylèneglycol ;
(iv) la séparation d'oxyde de propylène à partir du mélange obtenu en (ii) ou (iii), de préférence à partir du mélange obtenu en (iii), ce qui permet d'obtenir un mélange qui est appauvri en oxyde de propylène et comprenant de l'eau, le solvant organique, au moins un composé oxygéné tel que défini dans la revendication 1 et comprenant de l'anthraquinone et/ou un dérivé d'anthraquinone et de préférence comprenant du propylèneglycol ;
(v) la séparation du solvant organique à partir du mélange obtenu en (iv), ce qui permet d'obtenir un mélange qui est appauvri en le solvant organique et comprenant de l'eau, au moins un composé oxygéné tel que défini dans la revendication 1 et comprenant de l'anthraquinone et/ou un dérivé d'anthraquinone et de préférence comprenant du propylèneglycol ;
(vi) de préférence le fait de soumettre le mélange obtenu en (v) à un étage d'élimination de propylèneglycol, de préférence comprenant
(I) l'évaporation du mélange dans au moins deux étages d'évaporation et/ou de distillation à des pressions de fonctionnement décroissantes des évaporateurs et/ou des colonnes de distillation ce qui permet d'obtenir un mélange (M') et un mélange (M") ;
(II) la séparation du mélange (M') obtenu en (I) dans au moins une étape de distillation supplémentaire, ce qui permet d'obtenir un mélange (M-I) qui est enrichi en eau, de préférence comprenant au moins 70 % en poids d'eau, et un mélange (M-II) qui est appauvri en eau, de préférence comprenant au maximum 30 % en poids d'eau ;
(III) la séparation de propylèneglycol à partir du mélange (M-II) dans au moins une étape de distillation supplémentaire ce qui permet d'obtenir un mélange qui est appauvri en propylèneglycol et comprenant de l'eau et au moins un composé oxygéné tel que défini dans la revendication 1 et comprenant de l'anthraquinone et/ou un dérivé d'anthraquinone ;
dans lequel le mélange obtenu à partir de (v) ou le mélange obtenu à partir de (vi)(III), de préférence le mélange obtenu à partir de (vi)(III), est le mélange aqueux M1.
